# FASCICULE DE BREVET EUROPEEN

(11) **EP 1 273 631 B1**
(45) Date de publication et mention de la délivrance du brevet: **15.02.2006**
(21) Numéro de dépôt: 02014319.4
(22) Date de dépôt: 08.07.1994
(51) Int. Cl.: C08L 83/04, C08L 51/08, C09D 183/04, C09D 151/08, C09D 183/10, C08L 83/10

(54) **Compositions de silicones durcissables à base de dispersions aqueuses de polyorganosiloxanes fonctionnalisés gréffés**
Härtbare Siliconzusammensetzungen auf Basis von wässrigen Dispersionen von gepfropften funktionalisierten Polyorganosiloxanen
Curable silicone compositions based on aqueous dispersions of graft functionalised polysiloxanes

(30) Priorité: 23.07.1993 FR 9309095
(43) Date de publication de la demande: 08.01.2003
(62) Demande divisionnaire de: 94420195.3
(73) Titulaire: RHODIA CHIMIE, 92512 Boulogne Billancourt Cedex (FR)
(72) Inventeur: Canivenc, Edith, 69008 Lyon (FR); Richard, Joel, 49160 Blou (FR)
(74) Mandataire: Trolliet, Maurice

(56) Documents cités:
- EP-B- 0 350 240
- WO-A-90/10665
- WO-A-92/22615

## Description

La présente invention a pour objet des compositions silicones durcissables faites à partir de dispersions aqueuses réactives stables de polyorganosiloxanes fonctionnalisés greffés par des motifs polymères dérivés de monomères éthyléniquement insaturés susceptibles de polymériser par voie radicalaire.

Le document WO-A-90 10665 décrit des dispersions aqueuses de polymères modifiés à partir d'un polyester greffé avec des greffons constitués de motifs copolymères dérivés d'au moins un monomère vinylique et d'au moins un organopolysiloxane éthyléniquement insaturé soluble dans ledit ou lesdits monomère(s) vinylique(s).

Les compositions silicones durcissables faisant l'objet de l'inventon sont destinées à réaliser - par polyaddition ou par hydrolyse et/ou polycondensation - des revêtements anti-adhérents pour papier réticulés, par voie thermique et/ou sous rayonnement UV en présence d'un catalyseur, ou sous faisceaux d'électrons.

Lesdites compositions sont caractérisées en ce qu'elles comprennent :
A : de 10 à 80 % en poids de dispersions aqueuses de polyorganosiloxanes fonctionnalisés greffés, lesquelles sont obtenues par polymérisation radicalaire en émulsion aqueuse ou en microsuspension :
   - d'au moins un monomère éthyléniquement insaturé susceptible de polymériser par voie radicalaire choisi dans le groupe constitué par un ester monoéthyléniquement insaturé d'acide carboxylique saturé, un ester saturé ou amide d'acide carboxylique monoéthyléniquement insaturé, un nitrile monoéthyléniquement insaturé, un acide carboxylique monoéthyléniquement insaturé, un hydroxyalkyl- ou aminoalkyl- ester d'acide carboxylique monoéthyléniquement insaturé, un monomère vinylaromatique, et l'acrylate ou le méthacrylate de dicyclopentadiényle,
   - en présence d'un polyorganosiloxane fonctionnalisé contenant des motifs semblables ou différents de formule (I):

      Rₐ Y_{b} X_{c} Si O_{(4-a-b-c)/2} (I)

formule dans laquelle :
- les symboles R sont semblables ou différents et représentent un groupe alkyle en C₁-C₁₈, un groupe aryle ou aralkyle en C₆-C₁₂, éventuellement substitué par des atomes d'halogène ;
- les symboles X sont semblables ou différents et représentent une fonction réactive susceptible de réagir chimiquement par addition, polyaddition, condensation, polycondensation, déshydrogénopolycondensation, sous l'action de la chaleur, de radiations, de faisceaux d'électrons et/ou à l'aide d'un catalyseur, consistant dans la fonction hydrogéno ou dans une fonction réactive liée à un atome de silicium par une liaison Si-C ou Si-O-C, ladite fonction réactive autre que la fonction hydrogéno étant un groupe hydrocarboné hydroxyfonctionnel, époxyfonctionnel, alkoxyfonctionnel, aryloxyfonctionnel ou acyloxyfonctionnel contenant de 1 à 20 atomes de carbone ;
- les symboles Y sont semblables ou différents et représentent un reste hydrocarboné éthyléniquement insaturé pouvant contenir un ou plusieurs hétéroélément(s) O ou N, reste lié à un atome de silicium du motif de formule (I) par une liaison Si-C et susceptible de réagir par voie radicalaire avec ledit ou les dits monomère(s) éthyléniquement insaturé(s), ledit reste Y étant un groupe -y-Y', où
   - y représente un radical polyvalent alkylène linéaire ou ramifié en C₁-C₁₈, éventuellement prolongé par des restes bivalents éthylène amine ou polyéthylèneamine, oxyalkylène ou polyoxyalkylène en C₁-C₃ éventuellement substitué par un radical hydroxy, hydroxycyclohexylène
   - Y' représente un radical alcénylcarbonyloxy ;
- a, b et c sont égaux à 0, 1, 2, ou 3;
- a+b+c = 0, 1, 2 ou 3 ;
   le taux de motifs SiO_{4/2} étant inférieur à 30% en mole ;
   le nombre de motifs de formule (I) dans lesquels l'atome de silicium porte une fonction X et/ou un reste Y est tel que lesdits polyorganosiloxanes contiennent
- au moins 5 milliéquivalents, de préférence de 10 à 500 milliéquivalents, de fonctions X pour 100 grammes de polyorganosiloxane de formule (I),
- au moins 5 milliéquivalents, de préférence de 10 à 500 milliéquivalents, de fonctions Y pour 100 grammes de polyorganosiloxane de formule (I) ; et B : de 90 à 20 % en poids d'une émulsion aqueuse d'un polyorganosiloxane réactif vis-à-vis des fonctions X du polyorganosiloxane fonctionnalisé greffé de formule (I).

Comme exemples de monomères éthyléniquement insaturés dont dérivent lesdits polyorganosiloxanes fonctionnalisés greffés on peut citer les monomères suivants :
- s'agissant des esters monoéthyléniquement insaturés d'acides carboxyliques saturés : acétate, propionate, butyrate, stéarate, benzoate de vinyle ;
- s'agissant des esters saturés et amides d'acide carboxyliques monoéthyléniquement insaturés : acrylates et méthacrylates d'alkyle en C₁-C₂₀ tels que méthyle, butyle, heptyle, propyle, heptadécanyle, acrylamide, méthacrylamide ;
- s'agissant des nitriles monoéthyléniquement insaturés: acrylonitrile, méthacrylonitrile ;
- s'agissant des acides carboxyliques monoéthyléniquement insaturés : acide acrylique, méthacrylique, itaconique, maleique ;
- s'agissant des hydroxyalkyl- ou aminoalkyl- esters d'acides carboxyliques monoéthyléniquement insaturés : acrylate d'hydroxyéthyle, hydroxypropyle, méthacrylate de 2-aminoéthyle ;
- s'agissant des monomères vinylaromatiques : styrène, vinyltoluène.

Parmi les radicaux R figurant dans la formule (I), on peut citer par exemple les groupes méthyle, éthyle, octyle, trifluoropropyle, phényle ; de préférence au moins 80% molaire desdits radicaux R représentent un groupe méthyle.

Comme exemple de fonctions réactives X , autres que la fonction hydrogéno, on peut citer :
- s'agissant des groupes hydrocarbonés hydroxyfonctionnels : 3-hydroxypropyl, 3-(2hydroxyéthoxy)propyl ;
- s'agissant des groupes hydrocarbonés époxyfonctionnels : 3-glycidoxypropyl, 4-éthanediyle(1,2-époxycyclo-hexyl) ;
- s'agissant des groupes hydrocarbonés alkoxyfonctionnels : méthoxy, éthoxy, butoxy, octyloxy ;
- s'agissant des groupes hydrocarbonés aryloxyfonctionnels : phényloxy ;
- s'agissant des groupes hydrocarbonés acyloxyfonctionnels : acétoxy.

A titre d'exemple de radicaux y on peut citer :
-CH₂- -(CH₂)₂- -(CH₂)₃- -CH₂-CH(CH₃)-CH₂-(CH₂)₃-NH-CH₂-CH₂- -(CH₂)₃-OCH₂- -(CH₂)₃-(OCH₂-CH₂)₂₉-(CH₂)₃-[O-CH₂-CH(CH₃))-]- -(CH₂)₃-OCH₂CH(OH)CH₂-(CH₂)₂-C₆H₉(OH)-

A titre d'exemples de radicaux Y' on peut citer les radicaux acrylyloxy et méthacrylyloxy.

Les polyorganosiloxanes contenant les motifs de formule (I) peuvent être des polymères linéaires pouvant éventuellement présenter jusqu'à 50% en poids de ramifications (motifs autres que des motifs "D"), des polymères cycliques ou des polymères tridimensionnels (résines).

Les dispersions aqueuses réactives stables A visées dans l'invention, présentent généralement un extrait sec de l'ordre de 5 % à 60 %, de préférence de l'ordre de 25 % à 50 % en poids. Ces dispersions aqueuses peuvent être obtenues par polymérisation radicalaire en émulsion aqueuse ou en microsuspension d'au moins un monomère éthyléniquement insaturé en présence dudit polyorganosiloxane fonctionnalisé contenant des motifs semblables ou différents de formule (I).

Les quantités respectives de monomère(s) éthyléniquement insaturé(s) et de polyorganosiloxane fonctionnalisé pouvant être mises en oeuvre, correspondent à un rapport pondéral monomère(s) / polyorganosiloxane de l'ordre de 98-50 / 2-50, de préférence de l'ordre de 95-75 / 5-25.

L'opération de polymérisation est réalisée, en milieu aqueux, en présence d'agents émulsifiants et d'un amorceur de polymérisation par voie radicalaire.

Parmi les agents émulsifiants pouvant être mis en oeuvre, seuls ou en mélange, on peut citer les agents anioniques classiques tels que par exemple les sels d'acides gras, les alkylsulfates, les alkylsulfonates, les alkylarylsulfonates, les sulfosuccinates, les alkylphosphates de métaux alcalins, les sels de l'acide abiétique hydrogénés ou non, les agents non-ioniques tels que par exemple les alcools gras polyéthoxylés, les alkylphénols polyéthoxylés et éventuellement sulfatés, les acides gras polyéthoxylés. Ceux-ci peuvent être utilisés à raison de 0,1 à 3% en poids par rapport au poids total de monomère(s) éthyléniquement insaturé(s) et polyorganosiloxane fonctionnalisé.

Les amorceurs pouvant être mis en oeuvre sont du type hydrosolubles ou hydrodispersables comme les hydropéroxydes, tels que par exemple l'eau oxygénée, l'hydropéroxyde de cumène, l'hydropéroxyde de tertiobutyle, l'hydropéroxyde de diisopropylbenzène, les persulfates tels que par exemple le persulfate de sodium, le persulfate de potassium, le persulfate d'ammonium. Ceux-ci peuvent être utilisés à raison de 0,01 à 4%, de préférence de 0,05 à 2% en poids par rapport au poids total de monomère(s) éthyléniquement insaturé(s) et polyorganosiloxane fonctionnalisé.

Ces amorceurs sont éventuellement associés à un réducteur, tel que les bisulfites ou le formaldéhydesulfoxylate de sodium, les polyéthylènes amines, les sucres tels que dextrose, saccharose, les sels métalliques de l'acide ascorbique. Les quantités de réducteur utilisées peuvent aller jusqu'à 3% en poids par rapport au poids du mélange monomère(s) + polyorganosiloxane fonctionnalisé.

Des agents limiteurs de chaîne peuvent éventuellement être présents dans des proportions allant de 0 à 3% en poids par rapport au mélange monomère(s) + polyorganosiloxane fonctionnalisé. Ils sont généralement choisis parmi : les mercaptans tels que N-dodécylmercaptan, le tertiododécylmercaptan ; le cyclohexène ; les hydrocarbures halogénés tels que le chloroforme, le bromoforme, le tetrachlorure de carbone, le tetrabromure de carbone ; les dimères de l'α-méthylstyrène.

L'opération de polymérisation peut être réalisée selon plusieurs modes opératoires différents.
Un premier mode de réalisation consiste à
- homogéneiser un mélange monomère(s) éthyléniquement insaturé(s) /polyorganosiloxane fonctionnalisé contenant des motifs semblables ou différents de formule (I) au sein d'un mélange eau / émulsifiant,
- et polymériser en présence d'un amorceur hydrosoluble ou hydrodispersable, à une température au moins égale à celle de décomposition dudit amorceur. Un deuxième mode de réalisation consiste à
- introduire un mélange monomère(s) éthyléniquement insaturé(s) /amorceur hydrosoluble ou hydrodispersable au sein d'une émulsion aqueuse de polyorganosiloxane fonctionnalisé contenant des motifs semblables ou différents de formule (I),
- et polymériser à une température au moins égale à celle de décomposition de l'amorceur. Un autre mode de réalisation consiste à
- préémulsifier un mélange monomère(s) éthyléniquement insaturé(s) /polyorganosiloxane fonctionnalisé contenant des motifs semblables ou différents de formule (I) / amorceur organosoluble, au sein d'un mélange eau / émulsifiant,
- et polymériser à une température au moins égale à celle de décomposition dudit amorceur.
   A titre d'exemple d'amorceurs organosolubles on peut citer les péroxydes organiques comme par exemple le péroxyde de lauroyle, de benzoyle, de tert-butyle ; les azonitriles comme par exemple l'azobis-isobutyronitrile.

L'opération de polymérisation se déroule généralement à une température de l'ordre de 60 à 85°C.

Comme expliqué ci-avant, les dispersions aqueuses réactives stables A de polyorganosiloxanes fonctionnalisés greffés peuvent être mises en oeuvre pour la réalisation de compositions silicones durcissables faisant l'objet de l'invention sous l'action de la chaleur, de radiations, de faisceaux d'électrons et/ou à l'aide d'un catalyseur.

C'est ainsi que par exemple les dispersions aqueuses réactives stables A à base de polyorganosiloxanes fonctionnalisés greffés dérivés de polyorganosiloxanes fonctionnalisés présentant des motifs de formule (I) dans laquelle X représente un atome d'hydrogène peuvent être mises en oeuvre :
- à côté d'émulsions aqueuses B comprenant des polyorganosiloxanes portant des fonctions hydroxyles pour la préparation de compositions durcissables en présence de catalyseurs à base de métaux ou de composés métalliques par exemple du type étain, platine, rhodium.
- à côté d'émulsions aqueuses B comprenant des polyorganosiloxanes portant des fonctions alcényles pour la préparation de compositions durcissables en présence de catalyseurs de polyaddition à base de métaux ou de composés métalliques par exemple du type platine, rhodium.

Les exemples suivants sont donnés à titre indicatif.

### Exemple 1 :

On prépare une huile organopolysiloxane insaturée (H1) de formule moyenne 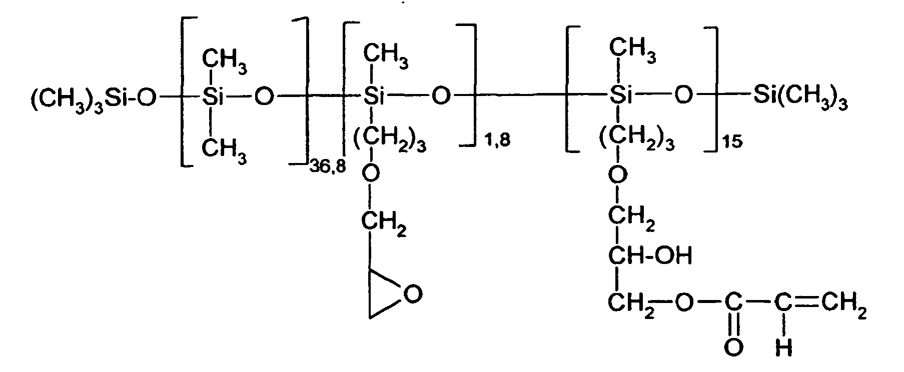 à partir des réactifs suivants :
- 100 g d'une huile polyorganosiloxane titrant 290 meq/100g de fonctions glycidyléther, de formule 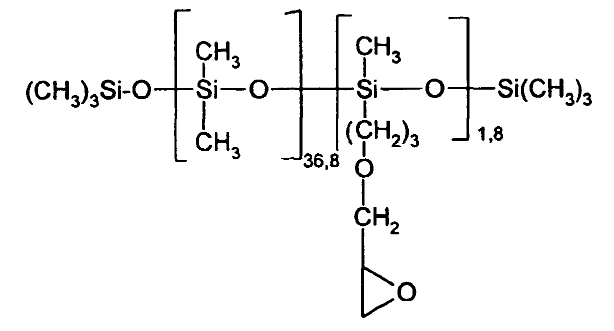
- 21 g d'acide acrylique
- 0,03 g d'hydroquinone (inhibiteur de polymérisation thermique)
- 0,2 g de 1,4 diazabicyclo [2,2,2] octane
- 50 g de toluène
   La réaction est réalisée dans un réacteur sous azote, la température du milieu réactionnel étant portée et maintenue à 100°C jusqu'à ce qu'on observe par titrage un taux de conversion de la fonction oxirane d'environ 90%.
   On élimine par distillation sous pression réduite (266 Pa) les solvants et l'acide acrylique non réagi.

### Préémulsion

Dans un becher de 1 l on mélange :
- 141 g de méthacrylate de méthyle
- 135 g d'acrylate de méthyle
- et 9 g d'acide acrylique.

On ajoute sous agitation 15 g de l'huile (H1) préparée ci-dessus.
Le milieu est laissé sous agitation jusqu'à complète dissolution.
Dans un becher, on mélange 180 g d'eau désionisée, 3,9 g d'une solution aqueuse de dodecylbenzenesulfonate de sodium (DBS-Na) à 38,5 % en poids.
On introduit dans cette solution et sous agitation le mélange monomères acryliques / diorganopolysiloxane. Le mélange obtenu est émulsifié à l'aide d'un homogénéiseur de type ULTRA-TURAX® (commercialisé par PROLABO) pendant 5 minutes à 20000 tours/minute. On obtient ainsi une préémulsion des monomères et de l'huile silicone fonctionnalisée.

### Polymérisation

Dans un réacteur d'un litre, on introduit 198,5 g d'eau que l'on porte à 82°C sous agitation.
On ajoute ensuite :
- 20 g de la préémulsion préparée ci-dessus,
- 0,90 g de persulfate d'ammonium.

On attend 15 minutes pour que l'amorçage de la réaction s'effectue, puis on ajoute sur une durée de 4 heures, le reste de la préémulsion, soit 463,90 g. On laisse cuire à 82°C pendant 30 minutes. On refroidit à 60°C et on ajoute 0,42 g d'hydroperoxyde de tertiobutyle et 0,18 g de Na₂S₂O₅. On maintient la température à 60°C pendant 30 minutes et on refroidit à température ambiante. On neutralise avec une solution d'ammoniaque diluée à 20 %. On obtient un latex à 40 % d'extrait sec, qui présente une très bonne stabilité au stockage.

### Exemple 2 :

On prépare une huile organopolysiloxane insaturée (H2) de formule moyenne 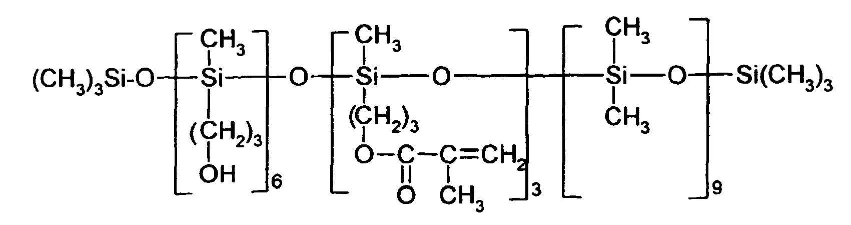
à partir des réactifs suivants :
- 40 g d'une huile polyorganosiloxane titrant 468 meq/100g de fonctions gamma-hydroxypropyle, de formule 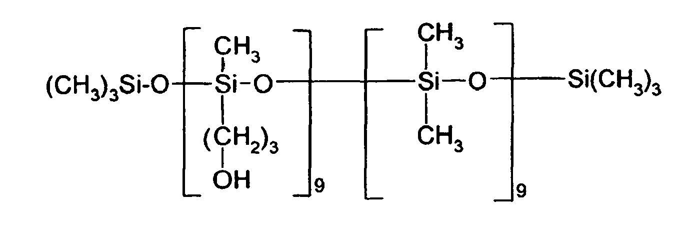
- 65,5 g de méthacrylate de méthyle
- 1,13 g d'oxyde de n-butylétain
- 0,26 g d'hydroquinone

On effectue la réaction pendant 1 heure à 100°C, puis en fin de réaction on élimine l'excès de methacrylate de méthyle par distillation pendant 1 heure sous 0,4 kPa.

### Préémulsion :

On introduit dans un réacteur d'un litre, sous forte agitation (homogénéiseur ULTRA-TURRAX®) :
- 141 g de méthacrylate de méthyle,
- 120 g d'acrylate de butyle,
- 380 g d'eau désionisée,
- 9 g d'acide acrylique,
- 30 g de l'huile silicone (H2) préparée ci-dessus
- 3,5 g de péroxyde de lauroyle,
- 3,9 g d'une solution aqueuse de DBS-Na à 38,5 % en poids,

### Polymérisation :

On chauffe la préémulsion à 70°C sous agitation et maintient cette température pendant toute la durée de réaction, soit 5 heures. On neutralise par ajout d'une solution aqueuse d'ammoniaque à 20 %.
On obtient un latex à 40% d'extrait sec.

### Exemple 3 :

On prépare une huile organopolysiloxane insaturée (H3) de formule moyenne suivante, titrant 220 meq/100 g de fonction acétoacétate 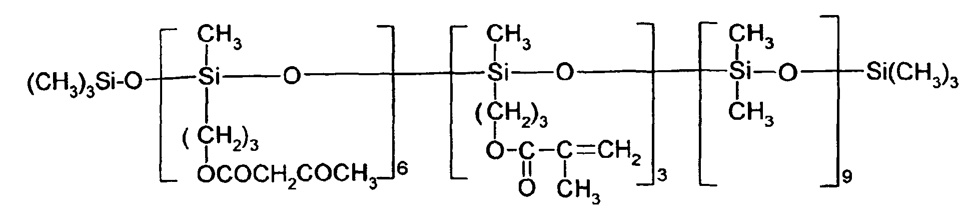
à partir de
- 100g de l'huile silicone (H2) ci-dessus
- 1ml de triéthylamine
- 150 ml de toluène
- 27,7 g de dicétène

La réaction est réalisée à une température de 50°C pendant 1 heure après la fin de l'introduction du dicétène.
L'excès de dicétène est évaporé sous pression réduite (0,7 kPa) à 50-60°C.

### Préémulsion :

On introduit dans un réacteur d'un litre, sous forte agitation (homogénéiseur ULTRA-TURRAX®)
- 141 g de méthacrylate de méthyle,
- 105 g d'acrylate de butyle,
- 9 g d'acide acrylique,
- 380 g d'eau désionisée,
- 45 g de l'huile silicone (H3),
- 7,8 g d'une solution aqueuse de DBS-Na à 38,5 % en poids,
- 2,5 g d'azobisisobutyronitrile (AIBN).

### Polymérisation :

On chauffe la préémulsion à 65°C sous agitation et maintient cette température pendant 6 heures. On neutralise par ajout d'une solution aqueuse de carbonate de sodium.
On obtient un latex à 40% d'extrait sec.

## Revendications

1. Compositions silicones durcissables, destinées à réaliser - par polyaddition ou par hydrolyse et/ou polycondensation - des revêtements anti-adhérents pour papier réticulés, par voie thermique et/ou sous rayonnement UV en présence d'un catalyseur, ou sous faisceaux d'électrons, **caractérisées en ce qu'**elles comprennent :
A: de 10 à 80 % en poids de dispersions aqueuses de polyorganosiloxanes fonctionnalisés greffés, lesquelles sont obtenues par polymérisation radicalaire en émulsion aqueuse ou en microsuspension :
• d'au moins un monomère éthyléniquement insaturé susceptible de polymériser par voie radicalaire choisi dans le groupe constitué par un ester monoéthyléniquement insaturé d'acide carboxylique saturé, un ester saturé ou amide d'acide carboxylique monoéthyléniquement insaturé, un nitrile monoéthyléniquement insaturé, un acide carboxylique monoéthyléniquement insaturé, un hydroxyalkyl- ou aminoalkyl- ester d'acide carboxylique monoéthyléniquement insaturé, un monomère vinylaromatique, et l'acrylate ou le méthacrylate de dicyclopentadiényle,
• en présence d'un polyorganosiloxane fonctionnalisé contenant des motifs semblables ou différents de formule (I):
Rₐ Y_{b} X_{c} Si O_{(4-a-b-c)/2} (I)
formule dans laquelle :
- les symboles R sont semblables ou différents et représentent un groupe alkyle en C₁-C₁₈, un groupe aryle ou aralkyle en C₆-C₁₂, éventuellement substitué par des atomes d'halogène ;
- les symboles X sont semblables ou différents et représentent une fonction réactive susceptible de réagir chimiquement par addition, polyaddition, condensation, polycondensation, déshydrogénopolycondensation, sous l'action de la chaleur, de radiations, de faisceaux d'électrons et/ou à l'aide d'un catalyseur, consistant dans la fonction hydrogéno ou dans une fonction réactive liée à un atome de silicium par une liaison Si-C ou Si-O-C, ladite fonction réactive autre que la fonction hydrogéno étant un groupe hydrocarboné hydroxyfonctionnel, époxyfonctionnel, alkoxyfonctionnel, aryloxyfonctionnel ou acyloxyfonctionnel contenant de 1 à 20 atomes de carbone ;
- les symboles Y sont semblables ou différents et représentent un reste hydrocarboné éthyléniquement insaturé pouvant contenir un ou plusieurs hétéroélément(s) O ou N, reste lié à un atome de silicium du motif de formule (I) par une liaison Si-C et susceptible de réagir par voie radicalaire avec ledit ou les dits monomère(s) éthyléniquement insaturé(s), ledit reste Y étant un groupe -y-Y', où
. y représente un radical polyvalent alkylène linéaire ou ramifié en C₁-C₁₈, éventuellement prolongé par des restes bivalents éthylène amine ou polyéthylèneamine, oxyalkylène ou polyoxyalkylène en C₁-C₃ éventuellement substitué par un radical hydroxy, hydroxycyclohexylène
. Y' représente un radical alcénylcarbonyloxy ;
- a, b et c sont égaux à 0, 1, 2, ou 3;
- a+b+c = 0, 1, 2 ou 3 ;
le taux de motifs SiO_{4/2} étant inférieur à 30% en mole ;
le nombre de motifs de formule (I) dans lesquels l'atome de silicium porte une fonction X et/ou un reste Y est tel que lesdits polyorganosiloxanes contiennent
- au moins 5 milliéquivalents de fonctions X pour 100 grammes de polyorganosiloxane de formule (I),
- au moins 5 milliéquivalents de restes Y pour 100 grammes de polyorganosiloxane de formule (I) ;
et B : de 90 à 20 % en poids d'une émulsion aqueuse d'un polyorganosiloxane réactif vis-à-vis des fonctions X du polyorganosiloxane fonctionnalisé greffé de formule (I).

2. Compositions silicones durcissables selon la revendication 1, **caractérisées en ce que** le nombre de motifs de formule (I) dans lesquels l'atome de silicium porte une fonction X et/ou un reste Y est tel que lesdits polyorganosiloxanes contiennent :
- de 10 à 500 milliéquivalents de fonctions X pour 100 grammes de polyorganosiloxane de formule (I),
- de 10 à 500 milliéquivalents de restes Y pour 100 grammes de polyorganosiloxane de formule (I).

3. Compositions silicones durcissables selon la revendication 1 ou 2, **caractérisées en ce que** les quantités respectives de monomère(s) éthyléniquement insaturé(s) et de polyorganosiloxane fonctionnalisé contenant des motifs de formule (I) mises en oeuvre, correspondent à un rapport pondéral monomère(s) / polyorganosiloxane de l'ordre de 98-50 / 2-50.

4. Compositions silicones durcissables selon la revendication 3, **caractérisées en ce que** les quantités respectives de monomère(s) éthyléniquement insaturé(s) et de polyorganosiloxane fonctionnalisé contenant des motifs de formule (I) mises en oeuvre, correspondent à un rapport pondéral monomère(s) / polyorganosiloxane de l'ordre de 95-75 / 5-25.

5. Compositions silicones durcissables selon l'une quelconque des revendications 1 à 4, **caractérisées en ce que**, lors de la préparation des dispersions aqueuses de polyorganosiloxanes fonctionnalisés greffés, l'opération de polymérisation est réalisée en milieu aqueux en présence d'agents émulsifiants et d'un amorceur de polymérisation par voie radicalaire.

6. Compositions silicones durcissables selon la revendication 5, **caractérisées en ce que** les dispersions aqueuses de polyorganosiloxanes fonctionnalisés greffés sont obtenues selon un mode de réalisation consistant à homogéneiser un mélange monomère(s) éthyléniquement insaturé(s) /polyorganosiloxane fonctionnalisé au sein d'un mélange eau / émulsifiant et polymériser en présence d'un amorceur hydrosoluble ou hydrodispersable, à une température au moins égale à celle de décomposition dudit amorceur.

7. Compositions silicones durcissables selon la revendication 5, **caractérisées en ce que** les dispersions aqueuses de polyorganosiloxanes fonctionnalisés greffés sont obtenues selon un mode de réalisation consistant à introduire un mélange monomère(s) éthyléniquement insaturé(s) / amorceur hydrosoluble ou hydrodispersable au sein d'une émulsion aqueuse de polyorganosiloxane fonctionnalisé et polymériser à une température au moins égale à celle de décomposition de l'amorceur.

8. Compositions silicones durcissables selon la revendication 5, **caractérisées en ce que** les dispersions aqueuses de polyorganosiloxanes fonctionnalisés greffés sont obtenues selon un mode de réalisation consistant à préémulsifier un mélange monomère(s) éthyléniquement insaturé(s) /polyorganosiloxane fonctionnalisé / amorceur organosoluble, au sein d'un mélange eau / émulsifiant et polymériser à une température au moins égale à celle de décomposition dudit amorceur.

9. Compositions silicones durcissables selon l'une quelconque des revendications 1 à 8, **caractérisées en ce que** :
• les dispersions aqueuses A comprennent des polyorganosiloxanes fonctionnalisés greffés de formule (I) dans laquelle X représente un atome d'hydrogène ;
• les émulsions aqueuses B comprennent des polyorganosiloxanes portant des fonctions hydroxyles ou des fonctions alcényles.

10. Utilisation des compositions silicones durcissables faisant l'objet de l'une quelconque des revendications précédentes pour la réalisation de revêtements anti-adhérents pour papier.

## Claims

1. Curable silicone compositions, intended for producing - by polyaddition or by hydrolysis and/or polycondensation - crosslinked anti-adhesive paper coatings, thermally and/or under UV radiation in the presence of a catalyst, or under electron beams, **characterized in that** said compositions comprise:
A: from 10% to 80% by weight of aqueous dispersions of grafted functionalized polyorganosiloxanes, obtained by free-radical polymerization in aqueous emulsion or in microsuspension:
• at least one free-radically polymerizable, ethylenically unsaturated monomer selected from the group consisting of a monoethylenically unsaturated ester of saturated carboxylic acid, a saturated ester or amide of monoethylenically unsaturated carboxylic acid, a monoethylenically unsaturated nitrile, a monoethylenically unsaturated carboxylic acid, a hydroxyalkyl or aminoalkyl ester of monoethylenically unsaturated carboxylic acid, a vinylaromatic monomer, and dicyclopentadienyl acrylate or methacrylate,
• in the presence of a functionalized polyorganosiloxane containing identical or different units of formula (I):
RₐY_{b}X_{c}SiO_{(4-a-b-c)/2} (I)
in which:
- the symbols R are identical or different and represent a C₁-C₁₈ alkyl group or a C₆-C₁₂ aryl or aralkyl group which is optionally substituted by halogen atoms;
- the symbols X are identical or different and represent a reactive function capable of reacting chemically by addition, polyaddition, condensation, polycondensation or dehydropoly-condensation under the action of heat, radiation or electron beams and/or with the aid of a catalyst composed of the hydrogen function or of a reactive function linked to a silicon atom by an Si-C or Si-O-C bond, said reactive function other than the hydrogen function being a hydroxyfunctional, epoxy-functional, alkoxy-functional, aryloxy-functional or acyloxy-functional hydrocarbon group containing 1 to 20 carbon atoms;
- the symbols Y are identical or different and represent an ethylenically unsaturated hydrocarbon residue which may contain one or more heteroelements O or N, said radical being joined to a silicon atom of the unit of formula (I) by an Si-C bond and being capable of reacting free-radically with said ethylenically unsaturated monomer(s), said radical Y being a group -y-Y', in which
. y represents a linear or branched polyvalent C₁-C₁₈ alkylene radical optionally extended with divalent ethyleneamine or polyethyleneamine residues, optionally hydroxy-substituted C₁-C₃ oxyalkylene or polyoxyalkylene residues or hydroxycyclohexylene residues;
. Y' represents an alcenylcarbonyloxy radical;
- a, b and c are 0, 1, 2 or 3;
- a+b+c = 0, 1 2 or 3;
the proportion of SiO_{4/2} units being less than 30 mol%;
the number of units of formula (I) in which the silicon atom carries a function X and/or a residue Y is such that said polyorganosiloxanes contain
- at least 5 milliequivalents of functions X per 100 grams of polyorganosiloxane of formula (I),
- at least 5 milliequivalents of residues Y per 100 grams of polyorganosiloxane of formula (I);
and B: from 90% to 20% by weight of an aqueous emulsion of a polyorganosiloxane which is reactive towards the functions X of the grafted functionalized polyorganosiloxane of formula (I).

2. Curable silicone compositions according to Claim 1, **characterized in that** the number of units of formula (I) in which the silicon atom carries a function X and/or a residue Y is such that said polyorganosiloxanes contain:
- from 10 to 500 milliequivalents of functions X per 100 grams of polyorganosiloxane of formula (I),
- from 10 to 500 milliequivalents of residues Y per 100 grams of polyorganosiloxane of formula (I).

3. Curable silicone compositions according to Claim 1 or 2, **characterized in that** the respective amounts of ethylenically unsaturated monomer(s) and of functionalized polyorganosiloxane containing units of formula (I) that are employed correspond to a monomer(s)/polyorganosiloxane weight ratio of the order of 98-50/2-50.

4. Curable silicone compositions according to Claim 3, **characterized in that** the respective amounts of ethylenically unsaturated monomer(s) and of functionalized polyorganosiloxane containing units of formula (I) that are employed correspond to a monomer(s)/polyorganosiloxane weight ratio of the order of 95-75/5-25.

5. Curable silicone compositions according to any one of Claims 1 to 4, **characterized in that**, during the preparation of the aqueous dispersions of grafted functionalized polyorganosiloxanes, the polymerization operation is carried out in an aqueous medium in the presence of emulsifiers and of a free-radical polymerization initiator.

6. Curable silicone compositions according to Claim 5, **characterized in that** the aqueous dispersions of grafted functionalized polyorganosiloxanes are obtained by an embodiment consisting in homogenizing a mixture of ethylenically unsaturated monomer(s) and functionalized polyorganosiloxane within a water/emulsifier mixture and in carrying out polymerization in the presence of a water-soluble or water-dispersible initiator at a temperature at least equal to the decomposition temperature of said initiator.

7. Curable silicone compositions according to Claim 5, **characterized in that** the aqueous dispersions of grafted functionalized polyorganosiloxanes are obtained by an embodiment consisting in introducing a mixture of ethylenically unsaturated monomer(s) and water-soluble or water-dispersible initiator within an aqueous emulsion of functionalized polyorganosiloxane and in carrying out polymerization at a temperature at least equal to the decomposition temperature of the initiator.

8. Curable silicone compositions according to Claim 5, **characterized in that** the aqueous dispersions of grafted functionalized polyorganosiloxanes are obtained by an embodiment consisting in pre-emulsifying a mixture of ethylenically unsaturated monomer(s) and functionalized polyorganosiloxane and organosoluble initiator within a water/emulsifier mixture and in carrying out polymerization at a temperature at least equal to the decomposition temperature of said initiator.

9. Curable silicone compositions according to any one of Claims 1 to 8, **characterized in that**:
• the aqueous dispersions A comprise grafted functionalized polyorganosiloxanes of formula (I)
in which X represents a hydrogen atom;
• the aqueous emulsions B comprise polyorganosiloxanes carrying hydroxyl functions or alcenyl functions.

10. Use of curable silicone compositions forming the subject of any one of the preceding claims for producing anti-adhesive paper coatings.

## Patentansprüche

1. Härtbare Siliconzusammensetzungen, die zur Herstellung - durch Polyaddition oder durch Hydrolyse und/oder Polykondensation - von vernetzten haftmindernden Beschichtungen für Papier auf thermischem Weg und/oder unter UV-Strahlung in Gegenwart eines Katalysators oder unter Elektronenstrahlen bestimmt sind, **dadurch gekennzeichnet, dass** sie umfassen:
A: 10 bis 80 Gew.-% wässrige Dispersionen von gepfropften funktionalisierten Polyorganosiloxanen, welche erhalten werden durch radikalische Polymerisation in wässriger Emulsion oder in Mikrosuspension:
• von wenigstens einem ethylenisch ungesättigten Monomer, das radikalisch polymerisieren kann, ausgewählt aus der Gruppe, die besteht aus einem monoethylenisch ungesättigten Ester einer gesättigten Carbonsäure, einem gesättigten Ester oder Amid einer monoethylenisch ungesättigten Carbonsäure, einem monoethylenisch ungesättigtem Nitril, einer monoethylenisch ungesättigten Carbonsäure, einem Hydroxyalkyl- oder Aminoalkylester einer monoethylenisch ungesättigten Carbonsäure, einem vinylaromatischen Monomer und Dicyclopentadienylacrylat oder -methacrylat,
• in Gegenwart eines funktionalisierten Polyorganosiloxans, das gleiche oder verschiedene Einheiten der Formel (I):
RₐY_{b}X_{c} Si O_{(4-a-b-c)/2} (I)
enthält, eine Formel, in der:
- die Symbole R gleich oder verschieden sind und eine C₁-C₁₈-Alkylgruppe, eine C₆₋C₁₂-Aryl- oder Aralkylgruppe, gegebenenfalls substituiert mit Halogenatomen, darstellen;
- die Symbole X gleich oder verschieden sind und eine reaktive Funktion darstellen, die durch Addition, Polyaddition, Kondensation, Polykondensation, Dehydrierung-Polykondensation unter der Einwirkung von Hitze, Strahlungen, Elektronenstrahlen und/oder mit Hilfe eines Katalysators chemisch reagieren kann, die besteht aus der Wasserstofffunktion oder aus einer reaktiven Funktion, die durch eine Si-C- oder Si-O-C-Bindung an ein Siliciumatom gebunden ist, wobei besagte von der Wasserstofffunktion verschiedene reaktive Funktion eine hydroxyfunktionelle, epoxyfunktionelle, alkoxyfunktionelle, aryloxyfunktionelle oder acyloxyfunktionelle Kohlenwasserstoffgruppe mit 1 bis 20 Kohlenstoffatomen ist;
- die Symbole Y gleich oder verschieden sind und einen ethylenisch ungesättigten Kohlenwasserstoffrest darstellen, der ein oder mehrere Heteroelemente O oder N enthalten kann, ein Rest, der an ein Siliciumatom der Einheit der Formel (I) durch eine Si-C-Bindung gebunden ist und radikalisch mit besagtem oder besagten ethylenisch ungesättigten Monomer(en) reagieren kann, wobei besagter Rest Y eine
- y-Y'-Gruppe ist, worin
. y einen linearen oder verzweigten mehrwertigen C₁-C₁₈-Alkylenrest darstellt, der gegebenenfalls durch zweiwertige Ethylenamin- oder Polyethylenamin-, C₁-C₃-Oxyalkylen- oder Polyoxyalkylenreste verlängert ist, gegebenenfalls substituiert mit einem Hydroxy-, Hydroxycyclohexylenrest
. Y' einen Alkenylcarbonyloxyrest darstellt;
- a, b und c gleich 0, 1, 2 oder 3 sind;
- a + b + c = 0, 1, 2 oder 3;
wobei der Gehalt an SiO_{4/2}-Einheiten kleiner als 30 Mol-% ist;
die Anzahl an Einheiten der Formel (I), in denen das Siliciumatom eine Funktion X und/oder einen Rest Y trägt, derart ist, dass besagte Polyorganosiloxane
- wenigstens 5 Milliäquivalente an Funktionen X pro 100 Gramm Polyorganosiloxan der Formel (I)
- wenigstens 5 Milliäquivalente an Resten Y pro 100 Gramm Polyorganosiloxan der Formel (I),
enthalten;
und B: 90 bis 20 Gew.-% einer wässrigen Emulsion eines Polyorganosiloxans, das gegenüber den Funktionen X des gepfropften funktionalisierten Polyorganosiloxans der Formel (I) reaktiv ist.

2. Härtbare Siliconzusammensetzungen gemäß Anspruch 1, **dadurch gekennzeichnet, dass** die Anzahl an Einheiten der Formel (I), in denen das Siliciumatom eine Funktion X und/oder einen Rest Y trägt, derart ist, dass besagte Polyorganosiloxane:
- 10 bis 500 Milliäquivalente an Funktionen X pro 100 Gramm Polyorganosiloxan der Formel (I),
- 10 bis 500 Milliäquivalente an Resten Y pro 100 Gramm Polyorganosiloxan der Formel (I)
enthalten.

3. Härtbare Siliconzusammensetzungen gemäß Anspruch 1 oder 2, **dadurch gekennzeichnet, dass** die jeweiligen eingesetzten Mengen an ethylenisch ungesättigtem(n) Monomer(en) und an funktionalisiertem Polyorganosiloxan, das Einheiten der Formel (I) enthält, einem Gewichtsverhältnis Monomer(e) / Polyorganosiloxan in der Größenordnung von 98-50 / 2-50 entsprechen.

4. Härtbare Siliconzusammensetzungen gemäß Anspruch 3, **dadurch gekennzeichnet, dass** die jeweiligen eingesetzten Mengen an ethylenisch ungesättigtem(n) Monomer(en) und an funktionalisiertem Polyorganosiloxan, das Einheiten der Formel (I) enthält, einem Gewichtsverhältnis Monomer(e) / Polyorganosiloxan in der Größenordnung von 95-75 / 5-25 entsprechen.

5. Härtbare Siliconzusammensetzungen gemäß einem der Ansprüche 1 bis 4, **dadurch gekennzeichnet, dass** bei der Herstellung der wässrigen Dispersionen von gepfropften funktionalisierten Polyorganosiloxanen der Polymerisationsvorgang in wässrigem Medium in Gegenwart von Emulgatoren und eines Initiators für die radikalische Polymerisation durchgeführt wird.

6. Härtbare Siliconzusammensetzungen gemäß Anspruch 5, **dadurch gekennzeichnet, dass** die wässrigen Dispersionen von gepfropften funktionalisierten Polyorganosiloxanen gemäß einer Durchführungsform erhalten werden, die darin besteht, ein Gemisch ethylenisch ungesättigtes(ungesättigte) Monomer(e) / funktionalisiertes Polyorganosiloxan in einem Gemisch Wasser / Emulgator zu homogenisieren und in Gegenwart eines wasserlöslichen oder wasserdispergierbaren Initiators bei einer Temperatur, die wenigstens gleich der Zersetzungstemperatur besagten Initiators ist, zu polymerisieren.

7. Härtbare Siliconzusammensetzungen gemäß Anspruch 5, **dadurch gekennzeichnet, dass** die wässrigen Dispersionen von gepfropften funktionalisierten Polyorganosiloxanen gemäß einer Durchführungsform erhalten werden, die darin besteht, ein Gemisch ethylenisch ungesättigtes(ungesättigte) Monomer(e) / wasserlöslicher oder wasserdispergierbarer Initiator in eine wässrige Emulsion von funktionalisiertem Polyorganosiloxan einzuführen und bei einer Temperatur, die wenigstens gleich der Zersetzungstemperatur des Initiators ist, zu polymerisieren.

8. Härtbare Siliconzusammensetzungen gemäß Anspruch 5, **dadurch gekennzeichnet, dass** die wässrigen Dispersionen von gepfropften funktionalisierten Polyorganosiloxanen gemäß einer Durchführungsform erhalten werden, die darin besteht, ein Gemisch ethylenisch ungesättigtes(ungesättigte) Monomer(e) / funktionalisiertes Polyorganosiloxan / organolöslicher Initiator in einem Gemisch Wasser /Emulgator vorzuemulgieren und bei einer Temperatur, die wenigstens gleich der Zersetzungstemperatur besagten Initiators ist, zu polymerisieren.

9. Härtbare Siliconzusammensetzungen gemäß einem der Ansprüche 1 bis 8, **dadurch gekennzeichnet, dass**:
• die wässrigen Dispersionen A gepfropfte funktionalisierte Polyorganosiloxane der Formel (I) umfassen, in der X ein Wasserstoffatom darstellt;
• die wässrigen Emulsionen B Polyorganosiloxane umfassen, die Hydroxylfunktionen oder Alkenylfunktionen tragen.

10. Verwendung der härtbaren Siliconzusammensetzungen, die Gegenstand von einem der vorhergehenden Ansprüche sind, für die Herstellung von haftmindernden Beschichtungen für Papier.
